# EUROPEAN PATENT APPLICATION

(11) **EP 4 770 048 A1**
(43) Date of publication of application: **01.07.2026**
(21) Application number: 24383474.4
(22) Date of filing: 27.12.2024
(51) Int. Cl.: H04L 65/80, H04W 4/70

(54) **METHODS AND DEVICES FOR DATA OFFLOADING FROM EMBARKABLE DEVICES**

(71) Applicant: Fundación Tecnalia Research & Innovation, 20009 Donastia-San Sebastían Gipuzkoa (ES); Universidad del Pais Vasco - Euskal Herriko Unibertsitatea (UPV/EHU), 48940 Leioa (ES)
(72) Inventor: GARCÍA PÉREZ, Asier, 20009 Donostia-San Sebastián (GIPUZKOA) (ES); TORRE BASTIDA, Ana Isabel, 20009 Donostia-San Sebastián (GIPUZKOA) (ES); MIÑÓN JIMÉNEZ, Raúl, 20009 Donostia-San Sebastián (GIPUZKOA) (ES); DÍAZ DE ARCAYA SERRANO, Josu, 20009 Donostia-San Sebastián (GIPUZKOA) (ES); SAGASTI MOTA, Diego, 20009 Donostia-San Sebastián (GIPUZKOA) (ES); AGUIRREZABAL, Pablo, 20009 Donostia-San Sebastián (GIPUZKOA) (ES); ZULUETA GUERRERO, Ekaitz, 48940 Leioa - BIZKAIA (ES)
(74) Representative: Balder IP Law, S.L.

(57) **Abstract**

A method of data offloading from an embarkable device (12), comprising:
collecting a plurality of data instances provided by sensors and/or telemetry data;
for each data instance, determining whether it is a data instance to be offloaded from the embarked device (12) or it is a data instance to be discarded;
making (204) a prediction (186) over a certain time horizon of at least one hardware saturation characteristic;
given a collection of possible offloading locations (184, I₁, I₂, ..., I_{N}) and given the prediction (186) over a certain time horizon of at least one hardware saturation characteristic, scheduling (205) at which time and to which offloading location (188), the offloading of the determined data instances should be conducted;
offloading the data instances from the embarkable device (12) at the scheduled time and location.

## Description

### TECHNICAL FIELD

The present invention relates to the field of data transfer or offloading from mobile entities in which storage, processing and/or battery capabilities are limited. The invention is in particular applicable to data offloading from battery-powered mobile entities.

### STATE OF THE ART

In more and more domains, mobile entities provide a significant added value thanks to their ability to measure aspects of the physical world using sensors, and thus be able to digitize data to process it and generate valuable information that improves decision-making processes.

However, technological advances also imply an increase in the data that must be processed. The acquisition of this data is usually gathered by a device with constrained resources and, consequently, the capacity to store and process data is limited. Therefore, data must be periodically transmitted to an external entity with more powerful storing and processing capabilities like a local server on the edge, the cloud or to similar devices in distributed environments where agents can cooperate among them. This process is known as data offloading, which can be defined as the transference of data from mobile devices to computing nodes with higher resources, for processing and storage.

This clearly states the undoubtedly necessity of data offloading processes to avoid congestion on the devices. Nevertheless, there are several challenges that must be faced to successfully offload data. One of them is the battery consumption: When downloading vast amounts of data, the battery consumption is drastically increased, since data transmission is identified as an energy-consuming task which considerably reduces the battery. As a result, the autonomy of battery-powered devices, such as drones, is significantly hindered. Other hardware limitations, such as hard disk usage, RAM memory usage and/or CPU usage should also be taken into account. Another challenge of data offloading processes in mobility environments relates to making the decision of how, where and when to carry out the data offloading process. On the one hand, there must be a trade-off as far as offloading periodicity is concerned. If the periodicity is too high the devices can be saturated, which can derive to an inadequate behaviour or, in the worst case, to directly stop working. Conversely, if the periodicity is too low the device will be underused and there will be more communications which could potentially reduce the battery. On the other hand, in mobility environments a target (location) to which the data could be offloaded can be more or less accessible or with variable coverage depending on the instant location of the device. This implies that the adequate decision of when and where to offload the data is not always trivial.

Therefore, there is a need to optimize data offloading in mobility environments.

### DESCRIPTION OF THE INVENTION

At least some of the drawbacks of conventional processes of data transfer or offloading in mobility environments are solved by the present disclosure.

The present disclosure provides a method and a device that enhance data communication economy in mobility environments. In particular, data communication economy in mobility environments having limited storage, processing and/or battery capabilities, is enhanced.

The proposed method and device are also aimed at guaranteeing successful data offloading. In the proposed method and device, the data offloading process is automated. This is achieved by implementing a software agent in an embarkable computing device.

In a first aspect of this disclosure, a method of data offloading from an embarkable device is provided. The method comprises: collecting a plurality of data instances provided by sensors and/or telemetry data; for each data instance, determining whether it is a data instance to be offloaded from the embarkable device or it is a data instance to be discarded; making a prediction over a certain time horizon of at least one hardware saturation characteristic; given a collection of possible offloading locations, and from said prediction of at least one hardware saturation characteristic, scheduling at which time and to which offloading location, the offloading of the determined data instances should be conducted; and offloading the data instances from the embarkable device at the scheduled time and location.

Preferably, the embarkable device is a device embarked within a mobile entity or to be embarked within a mobile entity.

The device is preferably a device embarked in, or attached to, an entity having the ability to move (from now on, a mobile entity). Non-limiting examples of mobile entities suitable to be used in the context of the present disclosure are drones (in general, unmanned aerial vehicles), robots, autonomous terrestrial vehicles (such as autonomous cars), bicycles, cellular devices (such as cellular phones, which are portable and move with the user) having enough processing capacity, human beings or animals (for example carrying a tracking device), among others. The embarked device may be embedded in the mobile entity, for example in computing means of the mobile entity. The embarked device is or comprises a computing system. Non-limiting examples of an embarked device is a system on chip, a system on module or an FPGA. The embarked device must have enough processing capacity to execute the artificial intelligent processes required for the data offloading method. For this reason, other types of computing means, such as microcontroller units, are discarded due to their limitations to execute the required processes and models. For example, in an example in which the mobile entity is a cellular phone, the embarked device is a computing system embedded in the cellular phone.

In embodiments, the mobile entity is an entity with movement capacity, either autonomously or human-driven or portable by a human or animal, such as a drone, a robot, an autonomous terrestrial vehicle, a bicycle, a cellular device or a tracking device.

In embodiments, the embarkable device is or comprises a computing system.

In the present disclosure, the mobile entity carrying an embarkable device is sometimes referred to as "combined system".

The stage of collecting a plurality of data instances provided by sensors and/or telemetry data is performed at the combined system, meaning that it may be done either at the embarkable device or, more generally, at the mobile entity in which the embarkable device is embarked.

The mobile entity in which the embarkable device is embarked is usually supplied with at least one battery. Alternatively or additionally, depending among others on the type of mobile entity, the embarkable device may itself be supplied with at least one battery. In other words, the embarkable device may be supplied with energy either from its own battery or from a power supply means, such as a battery, of the mobile entity in which it is embarked. One of the goals of the proposed method is to economize the energy consumption of the embarkable device and/or mobile entity. Consequently, the method is specially oriented to reducing (optimizing) such energy consumption.

The method can be executed in a software agent responsible for the data offloading. A software agent is considered an autonomous piece of software packaged to conduct a concrete task in a target device.

The sensors may be installed in the embarkable device or in the mobile entity, from which the embarked device receives the data instances. Preferably, at least some of the sensors are installed in the embarkable device. Non-limiting examples of sensors are a positioning system, such as a GPS or the like, for obtaining a position of the combined system; an ultrasound sensor, for determining or contributing to determining the position of the combined system with respect to other objects, so as to prevent collision. Telemetry data is data mainly generated by the mobile entity, usually without involvement of sensors. For example, telemetry data comprises data of the mobile entity, this data being monitored, typically continuously or periodically, to assess the behaviour and performance of the mobile entity. Non-limiting examples of data comprised in the telemetry data are data regarding CPU usage, memory usage, response time and available battery level, of either the embarkable device or the mobile entity, among others.

The collected data instances, either obtained from sensors or from telemetry data, are data representing temporal series, such as data having one or more fields (characters, strings, etc.) and a time stamp. Each piece of data may also be referred to as instance or data instance. Non-limiting examples of collected data are positioning data, temperature data, such as CPU temperature data, GPU temperature data, chipset temperature data, RAM module temperature data, HardDrive/SSD temperature data and general motherboard temperature data; voltage data, such as processor voltage (Vcore) data, RAM voltage data, or any other voltage data from other components; speed data, such as fan speed data, processor speed data and RAM speed data; data associated to other variables, such as CPU usage data, RAM usage data, available disk space data, status of hard drives data, memory error rate data and power consumption data; and data of other sensors, such as data captured from a chassis opening sensor, humidity sensor or dust sensor. The data instances may correspond to data originated at the embarkable device (for example, at hardware components of the embarkable device) or data originated at the mobile entity (for example, at hardware components of the mobile entity), or a combination of data originated at the embarkable device and data originated at the mobile entity (for example, at some hardware components of the embarkable device and at some hardware components of the mobile entity).

Depending on the domain and/or functionality of the mobile entity and/or the embarkable device one or more characteristics of the captured data will be considered. For example, volumetrics (size of the data) and/or statistical distribution of the captured data may be considered. Non-limiting examples of statistical distributions are normal, chi, or others. The communication protocol available at the mobile entity may determine, or at least have an influence, on the data acquisition stage.

In embodiments, the collected data instances are stored. The collected data instances are preferably saved at the embarkable device. They are preferably saved in a temporal storage means. The storage means is temporal, meaning that it can be overwritten to avoid storage overloads. The overwriting can be scheduled (for example with certain periodicity, such as every hour or every day) or can be at specific points in time, for example on demand.

In embodiments, the plurality of collected data instances provided by sensors and/or telemetry data are stored at storing means within the embarkable device. They are for example stored at temporal storing means. For example, they may be saved at hourly basis. The saved data may be overwritten from time to time to avoid storage overloads.

The stage of, for each data instance, determining whether it is a data instance to be offloaded from the embarkable device or it is a data instance to be discarded, is performed by a data selection model embedded in the embarkable device.

For example, the data selection model is executed over the data available at a temporal storage, to discard data that does not address a previously set filtering strategy (for example a strategy promoting uncertainty data, or a strategy promoting diversity data, o a hybrid strategy).

The data selection model is a deep active learning model. The learning model is a classification model providing a binary output: "data instance to be discarded" or "data instance not to be discarded".

To classify data as "to be discarded" or "not to be discarded", the data selection model has been previously trained, preferably at a remote location (for example at a cloud server or cloud architecture), with a collection of data instances collected at the embarked device and labelled as data instance to be offloaded or data instance to be discarded, according to a certain strategy. Taking into account features of the training data instances, the learning model learns what it should considered as similar to a previous data distribution or different from such data distribution. In other words, data is classified as "to be discarded" or "not to be discarded" depending on the similarity with the data distribution used to train the model. Non-limiting examples of features are shape, patterns and data thresholds, among others. To train the model so that it learns how a data instance should be classified, a similarity metric must have been previously established, to determine a classification threshold. Different criteria may be used to classify data as "to be discarded" or "not to be discarded". Non-limiting examples of criteria are uncertainty data and data diversity.

The already trained data selection model is therefore executed over the available data (collected data instances). When a new data instance is provided to the data selection model, the model is able to determine (classify) whether this data instance is similar to the data with which it has been trained, or this data instance is different therefrom. Depending on the application or scenario, the data selection model will be configured to choose the similar data (similar to the data distributed used for the training stage) as "data instance to be downloaded" and the non-similar data as "data instance to be discarded", or vice versa, or even a combination of both. For example, in scenarios in which the goal is to create a baseline of good system performance, similar data is chosen as "data to be downloaded". In contrast, in scenarios which priority is to analyze outliers or not frequent situations, different data (non-similar data) are chosen as "data to be downloaded".

The data (collected data instances) are preferably processed at the data selection model. For example, some or all of the following techniques may be applied: discarding wrong data, filtering data under or above certain thresholds, check the data quality / validity, standardizing measure unit, and scaling and/or normalizing data.

After the execution, the data instances are either discarded or selected to be offloaded from the embarkable device (for example transferred to storage means located at the cloud). The criterion for selecting or discarding the data instances depends on a selected strategy.

Non-limiting applications in which similar data are usually chosen to be offloaded, are applications of system performance monitoring, quality control in manufacturing and use behaviour analysis. For example, in a scenario for monitoring the performance of servers in a data center, by focusing on normal data, a baseline of typical performance metrics can be established. This helps in identifying deviations that might indicate potential issues or failures. In another example, in a scenario for ensuring the quality of products on a production line, normal data usually represents products that meet quality standards. By focusing on this data, one can quickly identify and address any deviations that might indicate defects. In another example, in a scenario for analyzing user behaviour on a website, understanding normal user behaviour helps in optimizing the user experience and identifying unusual patterns that might indicate security threats or usability issues.

In particular, non-limiting mobility applications in which similar data are usually chosen to be offloaded, are applications for battery health monitoring, energy consumption in drones and wearable fitness devices. For example, in a scenario for monitoring the battery health of electric scooters, by focusing on similar data, one can establish a baseline for typical battery performance metrics such as charge cycles, voltage levels, and discharge rates. This helps in identifying deviations that might indicate potential battery degradation or failure. In another example, in a scenario for ensuring efficient energy consumption in delivery drones, similar data represents typical energy consumption patterns during flight. By focusing on this data, one can optimize flight paths and improve battery life, ensuring efficient operations. In another example, in a scenario for analyzing the battery usage of fitness trackers, understanding normal battery usage helps in optimizing the device's power management and identifying unusual patterns that might indicate software or hardware issues.

Non-limiting applications in which different data (non-similar data) is usually chosen to be offloaded, are applications of anomaly detection, medical diagnosis and cybersecurity. For example, in a scenario for detecting fraudulent transactions in a financial system, different data represents anomalies that could indicate fraud. By focusing on these anomalies, one can enhance security measures and prevent fraudulent activities. In another example, in a scenario for identifying rare diseases in medical imaging, different data might represent rare or abnormal conditions. Focusing on these can help in early diagnosis and treatment of uncommon diseases. In another example, in a scenario for monitoring network traffic for potential cyber threats, different data could indicate malicious activities. By focusing on these anomalies, one can improve threat detection and response strategies.

In particular, non-limiting mobility applications in which different data (non-similar data) is usually chosen to be offloaded, are applications for anomaly detection in electric vehicles, predictive maintenance for e-bikes and smartphone battery optimization. For example, in a scenario for detecting unusual battery behavior in electric cars, different data represents anomalies that could indicate issues such as battery overheating, unexpected discharge rates, or potential safety hazards. By focusing on these anomalies, one can enhance safety measures and improve the reliability of the vehicle. In another example, in a scenario for monitoring the battery health of electric bicycles, different data might represent early signs of battery wear or malfunction. By focusing on these anomalies, one can perform predictive maintenance to prevent breakdowns and ensure smooth operations. In another example, in a scenario for identifying unusual battery drain in smartphones, different data could indicate apps or processes that are consuming more power than expected. By focusing on these anomalies, one can optimize battery usage and improve the user experience.

Classifying captured data instances as "data instance to be discarded" or "data instance not to be discarded" causes a drastic reduction of data to be transmitted and, consequently, a drastic reduction of battery waste of the embarked devices and/or he mobile entity in which it is embarkable, and of channel congestions, is achieved.

The determination of which data instances are to be offloaded from the embarkable device, and therefore the amount of data to be offloaded, the knowledge by the embarkable device of a collection of possible offloading locations, and the prediction over a certain time horizon of certain hardware saturation characteristics of hardware comprised in the embarkable device and/or in the mobile entity, enables to schedule a suitable time and a suitable location at which the data offloading should be conducted. Therefore, the selection of an offloading location and an offloading time is performed taking the former information into account.

For example, the collection of possible offloading locations is a collection of GPS coordinates associated to offloading locations in which there may be good conditions (such as good coverage) to perform the data offloading.

The planification or scheduling of suitable offloading time and suitable offloading location is made at a scheduling algorithm (also referred to as scheduling planner) embedded in the embarkable device. The scheduling algorithm is an artificial intelligence (Al) algorithm or process. The scheduling algorithm is an optimization algorithm. The optimization algorithm schedules, at which time and to which offloading location, the offloading of the determined data instances should be conducted. Therefore, the optimization algorithm outputs an optimized pair time-location for the data offloading.

The scheduling algorithm needs as input the collection of possible offloading locations and the prediction of certain hardware saturation characteristic of hardware comprised in the embarkable device and/or in the mobile entity. Non-limiting examples of hardware saturation characteristics that may be taken into account are: amount (for example percentage (%)) of CPU used, amount of RAM memory used (or, similarly, amount of available RAM memory), amount of disk space used (or, similarly, amount of available disk space) and remaining battery charge (that is to say, remaining level of battery), among others. The hardware to which the hardware saturation characteristic(s) apply may be the embarkable device or the mobile entity or both. This depends, of course, on the type of mobile entity in which the embarkable device is embarked. For example, when the mobile entity is a drone or an autonomous vehicle, such hardware may be the hardware of the embarkable device or of the mobile entity. In other instances, for example when the mobile entity does not involve any hardware and/or software component, such as when the mobile entity is a person or animal carrying an embarkable device, the hardware only applies to the embarkable device.

In embodiments, the given prediction is a prediction of at least one of: amount of CPU used, amount of RAM memory used, available disk space and remaining battery charge. In a preferred embodiment, the given prediction comprises a prediction of the remaining battery charge. For example, it is a prediction of the remaining battery charge and of at least one of: amount of CPU used, amount of RAM memory used and available disk space. In a particular embodiment, the given prediction is a prediction of remaining battery charge, amount of CPU used, amount of RAM memory used and available disk space.

The prediction is a prediction over a certain time horizon, such a prediction over the next N hours. In a particular embodiment, it is a 24-hour prediction.

The prediction is provided by a prediction model. The prediction model is embedded (deployed) in the embarkable device. The prediction model makes predictions over a time horizon of the status (i.e. saturation or usage) of one or more hardware resources.

The prediction model has been previously trained, preferably a remote location (for example at a cloud server or cloud architecture). The remote location may be the same location as the remote location at which the data selection model has been trained but not necessarily.

The prediction model is trained with a collection of data instances collected at the embarkable device from hardware belonging to the embarkable device and/or the mobile entity. Depending on the hardware saturation characteristic(s) of interest, the prediction model will be trained with one, some or all of the following hardware saturation characteristics: amount (for example percentage (%)) of CPU used, amount of RAM memory used (or, similarly, amount of available RAM memory), amount of disk space used (or, similarly, amount of available disk space) and remaining battery charge (that is to say, remaining level of battery), among others. Preferably, at least the remaining battery charge of the markable device is used.

Every time the scheduling algorithm or scheduling planner of the embarkable device needs to schedule a suitable time and location to offload the selected data instances, a prediction of hardware saturation characteristic(s) is inferred from such model deployed on the embarkable devce.

The prediction is made over a certain time horizon. The time horizon H is typically divided in periods of certain time length T, so that the prediction is a collection of values of at least one hardware saturation characteristic at different times within the time horizon H. For example, the time horizon H may be 24 hours and the periods T are of 1 hour. Thus, the time horizon of 24 h is divided in 24 periods of 1 hour. And a prediction of one or more hardware saturation characteristics is given for each of the next 24 periods of 1 hour.

The frequency with which the scheduling planner schedules a new pair of "suitable time - suitable location" to offload new selected data instances, depends on several elements, such as the hard disk capacity, the frequency with which sensor and telemetry data are collected, and the size of the collected data.

In embodiments, a new prediction over a certain time horizon is made every time the scheduling planner has scheduled a pair "time & location" for the actual data instances to be offloaded. For example, the new prediction can be made shortly after a pair "time & location" has been scheduled.

The frequency with which the offloading of the data instances at the scheduled time and location is performed, may be previously established. Alternatively, this frequency may be updated dynamically, for example after a data offloading is accomplished.

In embodiments, the selection or scheduling of the key variables (suitable time and suitable location at which the data offloading should be conducted) is executed by the optimization algorithm by maximizing or minimizing an objective function considering at least one constraint. For example, the scheduling is executed by maximizing an objective function considering at least one constraint.

Different criteria may be considered to select an objective function to be maximized or minimized. For example, economical criteria, energy-efficiency criteria or speed criteria may be considered.

In embodiments, the objective function to be maximized is either the disk usage (amount of hard disk space used) at the embarkable device or at the mobile entity or the remaining charge of the battery at the embarkable device. For example, the objective function to be maximized is the hard disk usage at the embarkable device or at the mobile entity: max D (t, I), wherein "t" represents different values of times at which the offloading can be conducted with the certain time horizon; and "I" represents the different locations to which the offloading can be conducted. The hard disk usage is usually very relevant because it is directly associated to the amount of data to be selected to be offloaded.

In embodiments, the at least one constraint imposed to maximize the objective function is selected from: remaining charge of the battery of either the embarkable device or the mobile entity; usage of the hard disk of either the embarkable device or the mobile entity; usage of RAM memory of either the embarkable device or the mobile entity; and usage of CPU of either the embarkable device or the mobile entity. For example, the constraint of remaining capacity of the battery requires that it is over 15% (B(t)≥15%). For example, the constraint of usage of the disk requires that it is under 85% (D(t)≤85%). For example, the constraint of usage of RAM memory requires that it is under 85% (M(t)≤85%). For example, the constraint of usage of CPU requires that it is under 85% (C(t)≤85%).

For example, the objective function to be maximized is the remaining capacity of the battery which feeds the embarked device: max B (t, I), wherein "t" represents different values of times at which the offloading can be conducted with a certain horizon; and "I" represents different locations to which the offloading can be conducted. In this case, the hard disk usage becomes a possible constraint imposed to maximize the objective function.

In some embodiments, several or all the former constraints are imposed.

In some embodiments, network quality and/or coverage are also imposed in the optimization algorithm. For example, it may be imposed that a parameter of network quality (such as throughput, latency and/or packet loss rate) and/or a parameter of coverage is/are over a predefined threshold. The thresholds may vary depending on the scenarios.

The optimizing algorithm thus obtains a plurality of pairs location-time. For example, assuming there are L possible offloading locations l₁, l₂, ...l_{L} and T periods t₁, t₂, ...t_{T} within the time horizon H, different combinations of locations and time periods will be obtained. Taking into account the objective function to be maximized and the at least one imposed restriction, the pair location-time which best performs, is selected as scheduled time-location. The optimizing algorithm thus provides a pair of "location-time" for the data offloading for which the selected objective function is maximized considering the constraint(s).

Finally, the offloading of the data instances from the embarkable device is performed using suitable communications protocols. Preferably, suitable loT protocols are used, which are typically oriented to minimize overhead.

In embodiments, the offloading of the data instances is performed using a loT communications protocol. For example, the offloading of the data instances is performed using the MQTT protocol.

The MQTT protocol is preferably used for several reasons: It is a very light and efficient protocol. Besides, it is highly scalable and reliable, offering three different levels of quality of services. Finally, it offers diverse security mechanisms.

The proposed method achieves different advantages. On the one hand, battery usage of the embarkable device is reduced because the amount of data to be offloaded is reduced (by means of the performed selection of data instances) and because the time and location of the offloading is optimized. Besides, the data selection and optimization of time and location of the data offloading contributes to optimize the data offloading, since less important data are discarded before they contribute to saturate the limited resources of the embarkable device and/or the communications facilities.

In embodiments, the deep active learning model used as data selection model is trained at a remote location, such as at the cloud.

First, a model having a plurality of layers and an output layer, is defined. The defined model must be suitable to process temporal data series. The output layer is a binary classification layer. Later, when the model is trained, the binary classification layer will enable to either discard or keep each incoming piece of data.

Stages of data gathering, preparation, partition and/or labelling are required. They imply obtaining from the drone (in particular, from the embarked device) the raw data, without filtering, that will be utilized for the first version of the model. Next, input for the model must be set. To this end, the necessary transformations are applied. This entails operations like discarding wrong data, filtering data under or above certain thresholds, check the data quality / validity, standardize measure unit, or scale and normalize data. Subsequently, according to the seed size defined, a subset of data is selected to manually establish a label that will drive whether a data must be selected or not. This labelling process will undoubtedly be influenced by a data selection strategy previously set.

For example, a strategy may be to select uncertainty data (data about the model having more uncertainty than other data). Another strategy may be to select *data diversity* (select different samples representative of the model). Another alternative may be to use a hybrid approach where both strategies are considered/combined with certain weights. For instance, an approach could comprise, firstly, gather more representative data to create a base model and then, collect anomaly data to deal with wider scenarios. In any case, the selection of this strategy must be triggered considering the use that will be done with the data collected.

A first version of the model is trained with the labelled instances using suitable computing means (such as GPUs).

The model is then asked to automatically generate the labels for the rest of the data (data not considered for the seed).

Next the model may be trained with new labelled data to create a new version of it, considering more information.

To train the model, aadditional aspects must also be defined, such as the objective to be fulfilled when filtering data, the data required to make the filtering decision, that is to say key features that could be more significant and, consequently, a higher weight should be considered when taking the decision, and/or the seed size (the percentage of initial data that will be manually labelled to conduct the process). Regarding the objective, let us suppose that the user wants to create a baseline of specific data, then similar data would be selected. Conversely, if the user would like to build an anomaly detection model would promote selecting different data to provide the model with outliers.

The trained model can then be deployed at the embarkable device.

In embodiments, the prediction model used as data selection model is trained at a remote location, such as at the cloud. The training of the prediction model requires data acquisition representative of the operation of the mobile entity when performing its routine activities. This requires acquiring data during these routine activities at the geographical environment of operation, or at similar geographical environments. Therefore, the mobile entity having the embarked device should navigate in the different situations involving its daily routines. For example, when the mobile entity is a drone, it should navigate over the facility in which it is planned to operate. The training data acquired at this stage will be data associated to the hardware saturation characteristic(s) of interest. The goal is to capture data of, for example, amount (for example percentage (%)) of CPU used, amount of RAM memory used (or, similarly, amount of available RAM memory), amount of disk space used (or, similarly, amount of available disk space) and remaining battery charge (that is to say, remaining level of battery) during different daily, routine activities of the mobile entity. The model can then be trained with thish data providing saturation information caused by routine situations of usage of resources. Subsequently, this model must be deployed in the embarkable device to make predictions over a time horizon of such hardware resources.

In a second aspect of the disclosure, an embarkable device is provided. It comprises: means for collecting a plurality of data instances provided by sensors and/or telemetry data; means for, for each data instance, determining whether it is a data instance to be offloaded from the embarked device or it is a data instance to be discarded; means for making a prediction over a certain time horizon of at least one hardware saturation characteristic; means for, given a collection of possible offloading locations and the prediction of at least one hardware saturation characteristic, scheduling at which time and to which offloading location (188), the offloading of the determined data instances should be conducted and means for offloading the data instances from the embarkable device at the time and the location provided in the prediction.

A third aspect of the disclosure relates to an embarkable device comprising: at least one processor, and at least one memory comprising computer program code for one or more programs; the at least one processor, the at least one memory, and the computer program code configured to cause the device to at least carry out the steps of a method according to the first aspect of the disclosure.

The embarkable device of the second or third aspects is preferably a device embarked in a mobile entity.

In a fourth aspect of the disclosure, a computer program product is provided. The computer program product comprises instructions which, when the program is executed by a computer, cause the computer to carry out the steps of a method according to the first aspect of the disclosure.

The proposed data offloading method and device permits to reduce the cost, for example in terms of communication resources, of data communication to a storage reservoir (either local or at the cloud). It also enables to balance and optimize the computing load of data processing and/or transfer so that they do not interfere in self-maintenance of the embarkable device or mobile entity or functionality operations. The method and device are specially applicable to light embarkable devices (for example embarkable in light mobile entities or in entities having limited space to embark a device).

Additional advantages and features of the invention will become apparent from the detail description that follows and will be particularly pointed out in the appended claims.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 schematically shows a communication network infrastructure that may used by the method and device of the present disclosure.
Figure 2 shows a flow diagram of a method of data offloading from an embarkable device according to embodiments of the present disclosure.
Figure 3 shows a block diagram of a software agent of an embarkable device for executing the data offloading process according to embodiments of the present disclosure.
Figure 4 shows a block diagram illustrating the training processes of the data selection model and the prediction model according to embodiments of the disclosure.
Figure 5 schematically represents a complete whole system for data offloading optimization according to embodiments of the present disclosure.
Figure 6 shows an example of use case of the method provided in the present disclosure.

### DESCRIPTION OF A WAY OF CARRYING OUT THE INVENTION

The following description is not to be taken in a limiting sense but is given solely for the purpose of describing the broad principles of the invention. Next embodiments of the invention will be described by way of example, with reference to the above-mentioned drawings, showing apparatuses and results according to the invention.

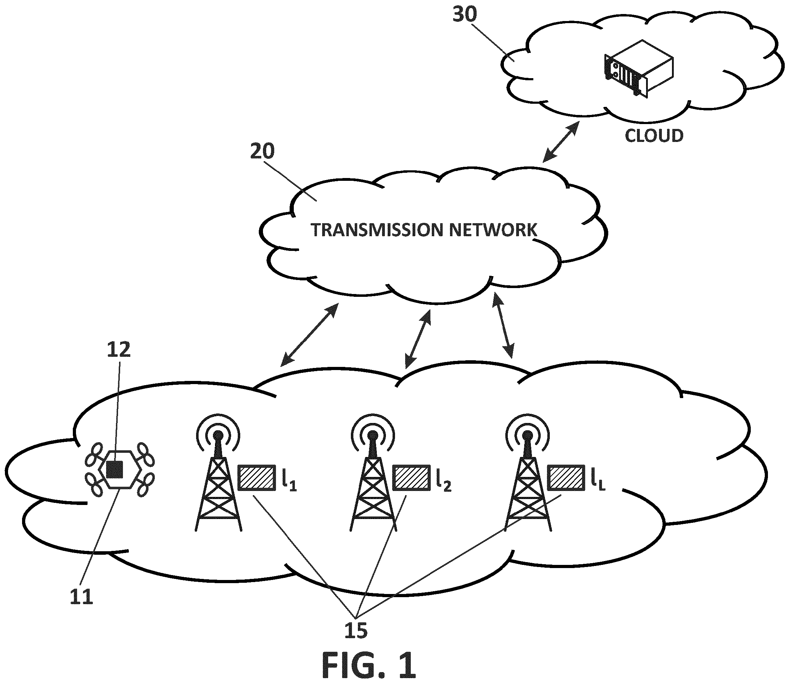

Figure 1 schematically illustrates a communication infrastructure for wireless communications (i.e. cellular communications, such as 3.5G, 4G, 5G or future generations, such as 6G, or short-range communications, such as Wi-Fi, Bluetooth, or the like). Three network levels are shown: a Radio Access Network (RAN) level 10, a Transmission Network level 20 and Cloud level 30. The Radio Access Network (RAN) 10 is comprised of communication antennas and other associated communication equipment, providing coverage to different geographical areas. Conventional RAN equipment is generally referred to as 15 in Figure 1. Different RAN equipment is disposed at different locations l₁, l₂, ... l_{N}.

Figure 1 also shows a mobile entity 11, which in the shown embodiment is a drone. From now on reference 11 is used to refer either generally to the mobile entity or specifically to the drone. The drone 11 has an embarked device 12. The drone 11 is capable of moving within a certain area. While it moves, the drone 11 is usually wirelessly connected to the radio access network 10 (typically to equipment in one location). From the radio access network 10 the drone 11 is also capable of communicating with the cloud 30 through the transmission network 20.

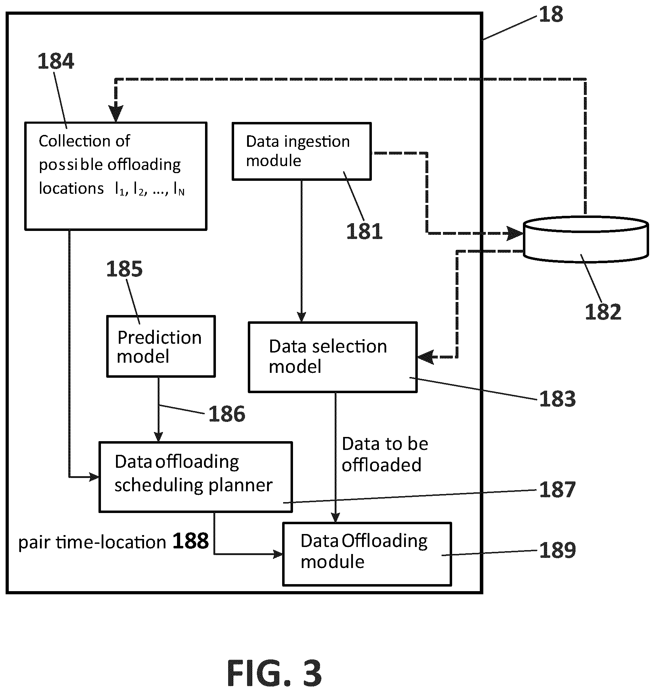

The drone 11 has embarked a device 12. The device 12 embarked in the drone 11 is in particular a computer means embedded in the drone 11. From now on reference 12 is used to refer either generally to the device or to the computer means. The embedded computer means 12 can be, for example, a system on chip, a system on module or an FPGA. The drone 11 must offload data from time to time (for example, with certain periodicity). The drone 11, and in particular the embarked device 12, need to offload data from time to time because they have (either the embarked device or the drone, or both) limited resources (such as battery, CPU, disk and memory) derived from the drone's demanding size and weight requirements. Offloaded data is typically sent to the cloud 30 from the communication location l₁, l₂, ... l_{N} to which the drone 11 is connected at the moment of conducting the data offloading. Embedded in the device (that is, computer means) 12 there is a software agent 18 schematized in Figure 3, responsible for the data offloading from the device 12. The drone 11 having the embarked device 12 is sometimes referred to as the combined system.

Installed in the device 12 and/or in the drone 11 there are sensors, for example a positioning system, such as a GPS or the like, for obtaining a position of the combined system; and/or an ultrasound sensor, for determining or contributing to determining the position of the combined system with respect to other objects, so as to prevent collision, or a temperature sensor. Additionally, in the combined system telemetry data is also generated, either at the embarked device 12 or at the drone 11, or at both. Telemetry data is data typically generated to assess the performance and operation of the combined system. For example, data regarding CPU usage, memory usage, response time and available battery level, among others, are typical telemetry data generated at the combined system. The embarked device 11 receives telemetry data instances and data instances from the sensors. In particular, data instances representing temporal series, such as data having one or more fields and a time stamp, are collected.

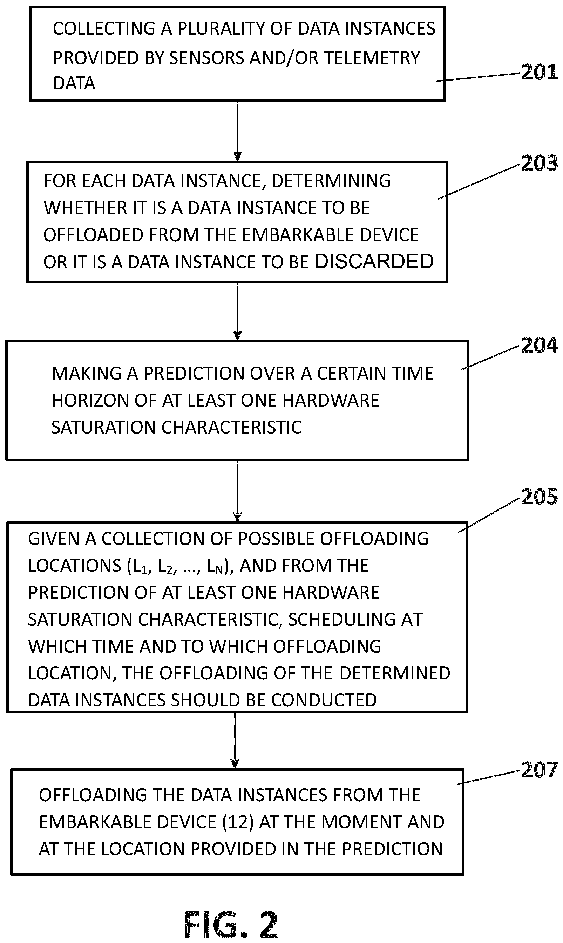

Figure 2 shows a flow diagram of a method of data offloading executed at the device 12. In particular, the method is executed in the software agent 18 responsible for the data offloading. A block diagram of the software agent 18 is shown in Figure 3. The software agent 18 is composed of several modules 181, 183, 185, 187 which are responsible for deciding (1) ingesting data from telemetry and sensors, (2) what data is transferred during the offloading process, (3) making predictions of hardware saturation resources over a time horizon and (4) which location is the most suitable one for receiving the offloaded data and which moment (for example time period) is the most suitable for conducting the data offloading. Another module 189 is responsible for the data offloading as such.

In a first stage 201, a plurality of data instances provided by sensors and/or telemetry data is collected. This is performed at the data ingestion module 181 of the software agent 18.

The collected data instances done by the data ingestion module 181 are preferably stored in temporal storing means 182 of the embarkable device, as denoted by the dotted arrows connecting the data ingestion module 181 and the temporal storing means 182, and the temporal storing means 182 and the data selection model 183.

In a second stage 203, for each data instance, it is determined whether it is a data instance to be offloaded from the embarked device or it is a data instance to be discarded. In other words, in this stage it is decided what data is transferred during the offloading process. This is done at a data selection model embedded in module 183 of the software agent 18.

In a third stage 204, a prediction over a certain time horizon of at least one hardware saturation characteristic is made. The prediction 186 is made at a prediction model embedded in module 185 of the software agent 18.

In a fourth stage 205, given the collection of possible offloading locations l₁, l₂, ..., l_{N} 184 of which the drone 11 and/or the embarked device 12 is aware (which can be stored in the temporal storing means 182 of the embarkable device, as denoted by the dotted arrows), and given the prediction 186 made at module 185, a selection 188 is made. The selection 188 is a selection of the time at which the offloading of the determined data instances should be conducted and the offloading location to which the determined data instances should be offloaded. In other words, in this stage it is decided, in an optimized fashion, when and where data should be transferred during the offloading process. This is done at a data offloading scheduling planner embedded in module 187 of the software agent 18.

The three decisions (what, where, when) enumerated above have therefore been taken.

Finally, in a fifth stage 207, once the decisions have been taken, the offloading of the selected data instances is made from the device 12 at the moment and at the location indicated in the prediction. This is represented by module 189 of the software agent 18.To perform this process in which it is decided (1) which data is going to be transferred, (2) which location is the most suitable one for receiving the offloaded data, and (3) which moment (for example time period) is the most suitable for conducting the data offloading, the data selection model embedded in module 183 and the prediction model embedded in module 185 of the software agent 18 installed in the device 12 must be suitably prepared.

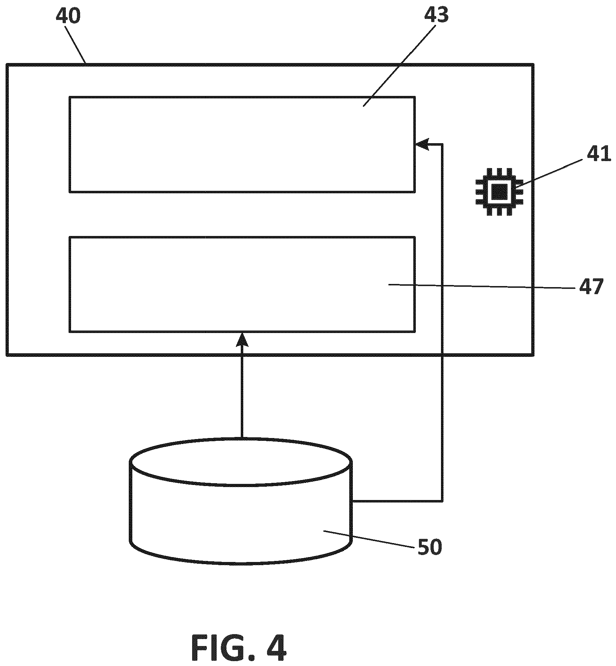

Figure 4 shows a block diagram illustrating the training process of the data selection model and the prediction model. For simplicity both training processes are represented in the same figure, but they could be depicted in separate figures. They are independent training processes. In fact, they could be performed at separate computing systems.

In Figure 4, the training processes are carried out in a server located in the cloud 30. Alternatively, the training processes could be carried out in a computing infrastructure deployed in a location different from the cloud. In Figure 4 a GPU-provisioned architecture 41 is used to train the models. In particular, an offloading control agent 40 to be executed at the GPU-provisioned architecture 41 is represented. In block 43 the training of the data selection model is represented. In block 47 the training of the prediction model is represented.

The training of the models is performed using data acquired by the device 12 (sensor and telemetry data) within a certain time period. For example, data is captured until getting a good enough dataset to start the training process. The size of the dataset could vary depending the representativeness of the data captured and the time to be capturing data could also vary considering the acquisition frequency. The training data are fed to the training models 43, 47 from storing means 50, at which data offloaded from a device 12 have been persisted. The aim of this step is to acquire an initial set of data.

The data selection model to be, once trained, embedded in module 183 of the software agent 18 of the device 12, will be responsible of deciding which data will be offloaded and which discarded. To this end, a learning model, preferably an active learning model, and more preferably deep active learning model, is created. For example, the data selection model is created as follows.

First, a model having a plurality of layers and an output layer, is defined. The defined model must be suitable to process temporal data series. The output layer is a binary classification layer. Later, when the model is trained, the binary classification layer will enable to either discard or keep each incoming piece of data.

To train the model, first a set of raw data is provided by a device (preferably an embarked device) to the model. This stage represents the first step of data gathering to start the training of the data selection model. The raw data is data representing temporal series, such as data having one or more fields (characters, strings, etc.) and a time stamp. Each piece of data may also be referred to as instance or data instance.

Next, a first subset of data from said set of raw data is selected. For example, the first subset of data can be selected by applying one or more of the following operations: discarding wrong data, filtering data under or above certain thresholds, check the data quality / validity, standardizing measure unit, and scaling and/or normalizing data. The size of the first subset of data is selected according to a seed size previously defined.

Then, a label is preferably assigned to each piece of data of the selected first subset of data, wherein each label indicates whether or not the associated piece of data should be selected to be offloaded; Labels are preferably assigned manually, for example, by a human operator which has analyzed the raw data. The labelling process, that is to say, whether a certain piece of data should be marked as a piece of data to be selected to be later offloaded or not, depends on a previously defined strategy for training the model. For example, the model may be trained to prioritize diversity (data representative of many different situations); or the model may be trained to prioritize anomalies (data representing anomalous scenarios); or the model may be trained following a hybrid approach, for example, firstly more representative data is gathered to create a base model and then, anomaly data is collected to deal with wider scenarios. In any case, the selection of the strategy will be done taking into account the future intended use of the collected data.

Next, the model is fed with the labelled first subset of data, so that a first trained model is obtained. The training model is thus trained. This is done, for example, at processing means available at the cloud 30, 40. The processing means may include, for example, one or more GPUs 41.

Then, a label is preferably assigned to at least some of the data from said set of raw data, not included in the selected first subset of data, wherein each label indicates whether or not the associated piece of data should be selected to be offloaded. This new labelling stage can be done manually (by a human operator) or automatically by the trained model. In embodiments, this new labelling stage is done for all the data not selected from the set of raw data.

Next, the first trained model is fed with the new labelled data, thus obtaining a second trained model. The first trained model is thus further trained. This is done at the same processing means available at the cloud. A resulting second trained model is achieved, which is reacher than the first trained model because more data has been considered for its training. Thus, a trained model has been obtained which, for each piece of input data (or data instance), binary classifies the data, delivering a binary classification, for example: "data to be offloaded" or "data to be discarded".

The trained data selection model is then deployed at the software agent 18 (module 183).

The prediction model to be, once trained, embedded in module 185 of the software agent 18 of the device 12, will be responsible of deciding when and where the data selected by module 183, will be offloaded. To this end, data representative of the operation of the drone 12 when performing its routine activities is acquired, preferably at the geographical environment of its current operation. Therefore, data is acquired while the drone 12 navigates over the facility in which it is planned to operate. The captured data is data representing hardware saturation characteristic(s) of interest, such as amount of CPU used, amount of RAM memory used, amount of disk space used and remaining battery charge during different routine activities of the drone. The model is thus trained with this data providing saturation information caused by routine situations of usage of resources.

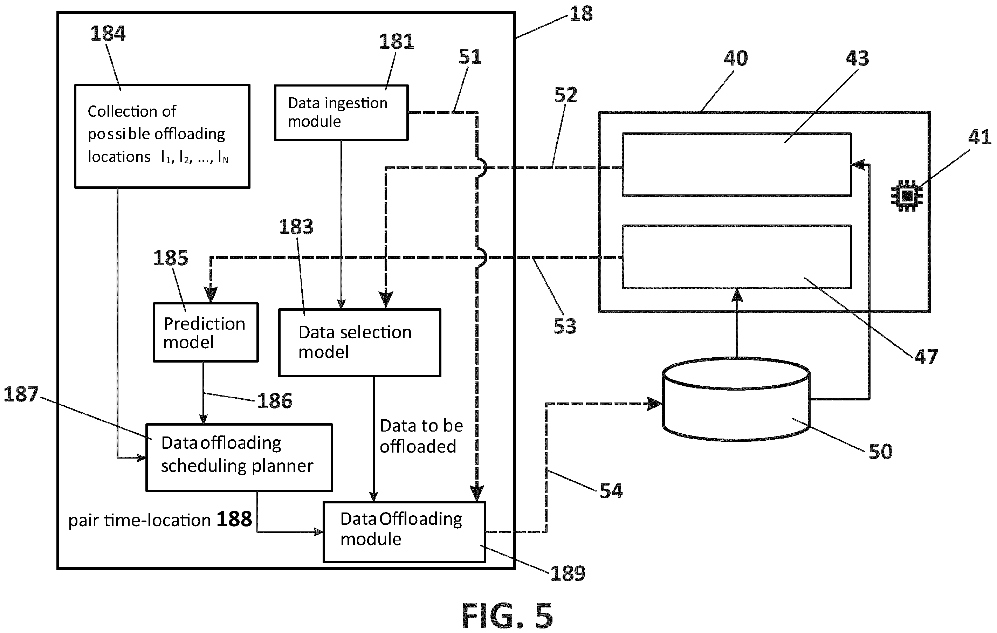

Figure 5 schematically represents the whole system for data offloading optimization. In particular, the main three involved subsystems are represented: the software agent (data offloading agent) 18 embedded in the embarked device 12; the offloading control agent 40 deployed in a suitable processor, such as a GPU architecture; and the storage means 50. It represents the system during operation of the proposed method, that is to say, when the models have been trained and deployed at the software agent 18 of the embarked device 12. In fact, the deployment of the respective models in the embarked device 12 is represented by dotted lines 52, 53. Line 54 denotes that the data offloaded during execution of the proposed method can be stored at the storing means 50, so that the models can be re-trained. Line 51 connecting the data ingestion module 181 of the software agent 18 installed at the device 12 and the data offloading module 189 thereof, represents the actual offloading of the data selected by the data selection model (module 183).

Once the models are deployed in the correspondent modules 183, 185, the method and system can start to work.

The invention is applicable in different industrial fields in the domain of mobility, such as the autonomous vehicle and drones.

For example, it enables, in a connected vehicle, to decide which data is uploaded to the cloud, at what time and in which location. It enables avoiding computing costs in the vehicle for non-critical processes, and improving the final dataset for failure prediction in the cloud.

In the case of drone networks, drones generate large amounts of data during their flights, including flight logs. Without proper management, this information can quickly overwhelm the storage and processing capacity of drones as well as quickly discharging the battery. Data offloading techniques allow this data to be transferred efficiently to ground storage systems, freeing up resources on the drones. Additionally, many drone applications require real-time processing of the collected data. Efficient offloading enables the rapid sending of critical information to ground control centers for immediate analysis, improving decision making and response to urgent situations. Data security and privacy also benefit from these techniques. By minimizing the time that sensitive data remains stored on drones, the risk of unauthorized access in the event of loss or capture of the aircraft is reduced. Finally, efficient offloading techniques optimize the use of bandwidth and energy of drones. This is especially important in multi-drone networks, where coordination and data sharing between aircraft are critical to achieving successful and safe missions.

### EXAMPLE

Let's suppose that a vast industrial park allocates several companies which manage chemical components. In consequence, it is extremely desirable to constantly measure, among other parameters, the air quality, the temperature and humidity and the wind velocity and direction. However, because the industrial park is located in a rural environment, there is not good enough network connectivity. Consequently, several Wi-Fi access points have been installed to enhance this connectivity.

To precisely measure the environmental parameters, a drone 11 equipped with a set of sensors 61-64 and an embarked device 12 is going to be configured and deployed in the industrial park. This drone 11 will navigate through the industrial park and will periodically take measures from the different areas. In order to build the complete solution, the following equipment is necessary for this context.

Drone 11: The target device is a remotely operated or autonomous UAV that, in addition to the UAV's own systems such as propellers or battery, carries a number of sensors 61-64 to take measurements. The on-board computer device 12 reads, collects and manages the data captured by the sensors. The UAV has a payload capacity greater than the weight of all the extra elements added to the UAV, such as sensors, gripping mechanism devices, computer device 12, computer device battery, wires to connect the computer device 12 to sensors or UAV sensors, etc. If the computer device is also configured to collect data from UAV's embedded and proprietary sensors, the UAV must be equipped with a software interface to enable this data collection and management. The target device is for example implemented with a professional UAV, such as the DJI Matrice 350 RTK, which has the following characteristics, among others: payload capacity of 2.7 kg; loading bays for attaching or installing various devices, stabilisers or loads; 55 minutes of flight time; and IP55 protection. In terms of software connectivity, it has dedicated SDKs for both development with third-party payloads such as sensors, computing modules, etc., and a dedicated SDK for direct connection to the sensors and control of the UAV itself. Alternatively, for indoor environments or those that require a smaller UAV, other DJI branded devices could be used, such as the Matrice 30T Plus, or even a DJI Mavic 3E/3T drone.

Embarked device 12: The computing system is for example the Google Coral system-on-module (https://coral.ai/products/som/) which is a production-ready embedded device prepared for performing machine learning inference for embedded devices. To this end, it is equipped with an edge TPU artificial intelligent accelerator which enables 4 TOPS (4 trillion of operations per second). The model selected is supported with a 16Gb eMMC Flash memory for the storage and 4GB of RAM memory. Additionally, it is provided with Wi-Fi and Bluetooth modules. In addition, a watertight enclosure has been integrated to protect it on the outdoor environment. A map with the Wi-Fi coordinates of the access points (locations) are also stored in the Google Coral system-on-module.

Set of sensors, to measure: humidity (for example, DHT11), air quality and temperature (for example, MQ-135 module), current GPS coordinates (for example, GPS module ICQUANZX) and wind and direction of the wind (for example, Baluue Replacement Cup Anemometer Wind Speed Sensor with Three Cups).

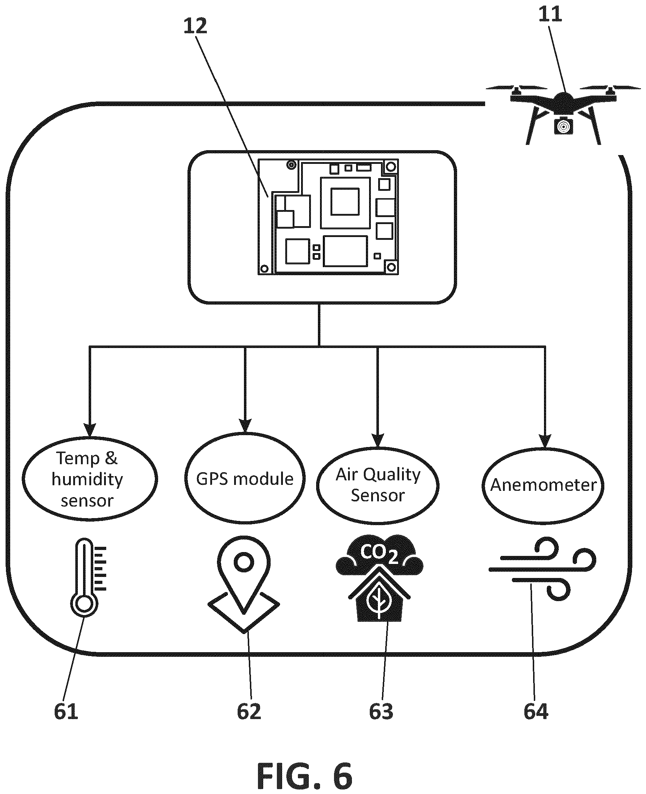

As shown in Figure 6, the drone 11 has embarked the Goggle Coral 12 (computing system), which, in turn, is equipped with the defined sensors.

If the drone is planned to fly over the industrial park, there will be a moment when the internal storage of the Goggle Coral will be near to be full. Therefore, a beforehand strategy is required to optimise this process. To this end, the present invention is utilised. The Google Coral is configured to implement a software agent to execute the proposed method.

The data selection model 183 implemented in the software agent of the Google Coral defines an uncertainty strategy, because in the proposed scenario it can be presupposed that the training data mainly provides adequate air quality records. This way, the offloading of this data could potentially be utilised to carry out specific actions to mitigate issues.

The drone has been made navigate over the industrial park to capture training data. With the captured training data, the data selection model and the prediction model have been trained. In particular, the prediction model has been trained to to make a prediction over the next 24 hours of: amount of CPU used, amount of RAM memory used, available disk space and remaining battery charge.

The trained models (data selection model and prediction model) are deployed at the mobile agent installed in the Google Coral. A collection of possible locations within the flying area of the drone, and to which offloading of data is potentially possible, is available in the Google Coral.

In use of the drone and emkarked device, every time, for example soon after, the scheduling planner schedules a new pair time-location for the offloading of the selected data, the mobile agent performs a new prediction of amount of CPU used, amount of RAM memory used, available disk space and remaining battery charge for the next 24 hours, so that the scheduling planner can schedule a new pair time-location for the following data offloading.By executing the data offloading scheduling planner (optimizer), the most suitable location and time for the data offloading is obtained.

In this text, the term "comprises" and its derivations -such as "comprising", etc.- should not be understood in an excluding sense, that is, these terms should not be interpreted as excluding the possibility that what is described and defined may include further elements, steps, etc.

On the other hand, the disclosure is obviously not limited to the specific embodiment(s) described herein, but also encompasses any variations that may be considered by any person skilled in the art -for example, as regards the choice of materials, dimensions, components, configuration, etc.-, within the general scope of the disclosure as defined in the claims.

## Claims

1. A method of data offloading from an embarkable device (12), comprising:
collecting (201) a plurality of data instances provided by sensors and/or telemetry data;
for each data instance, determining (203) whether it is a data instance to be offloaded from the embarked device (12) or it is a data instance to be discarded;
making (204) a prediction (186) over a certain time horizon of at least one hardware saturation characteristic;
given a collection of possible offloading locations (184, l₁, l₂, ..., l_{N}) and given the prediction (186) over a certain time horizon of at least one hardware saturation characteristic, scheduling (205) at which time and to which offloading location (188), the offloading of the determined data instances should be conducted;
offloading (207) the data instances from the embarkable device (12) at the scheduled time and location.

2. The method of claim 1, wherein the embarkable device (12) is a device embarked within a mobile entity (11).

3. The method of claim 2, wherein the mobile entity (11) is a drone, a robot, an autonomous terrestrial vehicle, a bicycle, a cellular device or a person or animal.

4. The method of either claim 2 or 3, wherein the embarkable device is or comprises a computing system.

5. The method of any of the preceding claims, wherein the offloading of the data instances is performed using a loT communications protocol.

6. The method of claim 5, wherein the offloading of the data instances is performed using the MQTT protocol.

7. The method of any of the preceding claims, further comprising storing the plurality of collected data instances provided by sensors and/or telemetry data at storing means (182) within the embarkable device (18).

8. The method of claim 7, wherein the collected data instances are stored at temporal storing means.

9. The method of any of the preceding claims, wherein the collection of possible offloading point locations (184, l₁, l₂, ..., l_{N}) is a collection of GPS coordinates associated to possible offloading locations to perform the data offloading.

10. The method of any of the preceding claims, wherein the prediction of the time at which the offloading of the determined data instances should be conducted and the offloading location to which the determined data instances should be offloaded, is done by an optimization algorithm (187) which maximizes an objective function considering at least one constraint.

11. The method of claim 10, wherein the objective function to be maximized is either disk usage or the remaining charge of battery.

12. The method of either claim 10 or 11, wherein the at least one constraint imposed to maximize the objective function is selected from: remaining charge of battery; usage of hard disk; usage of RAM memory; and usage of CPU.

13. The method of any of claims 10-12, wherein a parameter of network quality and/or coverage is also imposed as constraint in the optimization algorithm.

14. An embarkable device (12), comprising:
means (181) for collecting a plurality of data instances provided by sensors and/or telemetry data;
means (183) for, for each data instance, determining whether it is a data instance to be offloaded from the embarkable device (12) or it is a data instance to be discarded;
means (185) for making a prediction (186) over a certain time horizon of at least one hardware saturation characteristic;
means (187) for, given a collection of possible offloading locations (184, l₁, l₂, ..., l_{N}) and the prediction (186) over a certain time horizon of at least one hardware saturation characteristic, scheduling at which time and to which offloading location (188), the offloading of the determined data instances should be conducted;
means (189) for offloading the data instances from the embarkable device (12) at the time and at the location provided in the prediction.

15. A computer program product comprising instructions which, when the program is executed by a computer, cause the computer to carry out the steps of the method of anyone of claims 1-13.
